# EUROPÄISCHE PATENTSCHRIFT

(11) **EP 1 362 175 B1**
(45) Veröffentlichungstag und Bekanntmachung des Hinweises auf die Patenterteilung: **23.03.2005**
(21) Anmeldenummer: 01991694.9
(22) Anmeldetag: 22.12.2001
(51) Int. Cl.: F02D 41/22

(54) **VERFAHREN ZUR ERFASSUNG VON MASSENSTRÖMEN ZUM SAUGROHR EINER BRENNKRAFTMASCHINE**
METHOD FOR DETERMINING MASS FLOWS INTO THE INLET MANIFOLD OF AN INTERNAL COMBUSTION ENGINE
PROCEDE POUR DETECTER DES DEBITS MASSIQUES A LA TUBULURE D'ADMISSION D'UN MOTEUR A COMBUSTION INTERNE

(30) Priorität: 28.12.2000 DE 10065122
(43) Veröffentlichungstag der Anmeldung: 19.11.2003
(73) Patentinhaber: ROBERT BOSCH GMBH, 70442 Stuttgart (DE)
(72) Erfinder: SCHNAIBEL, Eberhard, 71282 Hemmingen (DE); TULEWEIT, Wilfried, 71701 Schwieberdingen (DE); PFITZ, Manfred, 71665 Vaihingen (DE); HERYNEK, Roland, 75443 Oetisheim (DE); BELLMANN, Holger, 71636 Ludwigsburg (DE); ESTEGHLAL, Gholamabas, 71638 Ludwigsburg (DE); HEINRICH, Detlef, 71638 Ludwigsburg (DE); REUSCHENBACH, Lutz, 70469 Stuttgart (DE); MALLEBREIN, Georg, 70825 Korntal-Muenchingen (DE)
(86) Internationale Anmeldenummer: PCT/DE2001/004925
(87) Internationale Veröffentlichungsnummer: WO 2002/053897

(56) Entgegenhaltungen:
- EP-A- 0 952 332
- DE-A- 3 624 441
- US-A- 5 513 616

## Beschreibung

Beispiele von Systemen, die dem Saugrohr Masse zuführen, sind die Tankentlüftung und die Abgasrückführung. Bekannte Verfahren zur Diagnose dieser Systeme basieren auf einer Erkennung von Masseströmen zum Saugrohr. Die DE 36 24 441 beschreibt beispielsweise ein Diagnoseverfahren für ein Tankentlüftungsventil, bei dem zeitgleich mit dem Öffnen des Tankentlüftungsventils ein Leerlaufsteller gegenläufig geschlossen wird. Im Gutzustand soll der zusätzliche Massenstrom aus dem Tankentlüftungssystem die Verringerung des Massenstroms über den Leerlaufsteller kompensieren.

Zur Diagnose der Abgasrückführung ist es weiter bekannt, die Temperaturerhöhung im Saugrohr durch den Abgasmassenstrom zum Saugrohr bei aktiver Abgasrückführung zu messen.

Aus der US 5,513,616 ist ein Verfahren zur Bestimmung einer Fehlfunktion einer Abgasrückführungsvorrichtung bekannt. Dabei wird ein Fehler der Abgasrückführungsvorrichtung erkannt, wenn eine Differenz zwischen einem Saugrohrdruck im Falle eines geöffneten Abgasrückführventils und einem Saugrohrdruck im Falle eines geschlossenen Abgasrückführventils in einen vorgegebenen Bereich fällt. Wenn die Saugrohrdruckdifferenz zu klein ist, dann wird von einem Fehler der Abgasrückführungsvorrichtung ausgegangen. Bei der US 5,513,616 geht es also um eine Fehlererkennung der Abgasrückführungsvorrichtung, wobei der Saugrohrdruck bei geöffneten Abgasrückführungsventil mit dem Saugrohrdruck bei geschlossenen Abgasrückführungsventil verglichen wird. Eine Massenstrombestimmung findet nicht statt.

Die Aufgabe der Erfindung besteht in der weiteren Verbesserung der Eigendiagnose von Motorsteuerungssystemen über eine Erkennung von Masseströmen zum Saugrohr.

Diese Aufgabe wird mit den Merkmalen des Anspruchs 1 gelöst.

Im einzelnen erfolgt die erfindungsgemäße Erfassung von Massenströmen zum Saugrohr einer Brennkraftmaschine
- mit Mitteln zur Steuerung der Luftzufuhr zum Saugrohr und mit
- Mitteln zum Erfassen des Saugrohrdruckes und mit
- Mitteln zum Auswerten des Saugrohrdruckverlaufs.

Dabei wird
- beim Abstellen der Brennkraftmaschine
- die Luftzufuhr zum Saugrohr gezielt verringert und der sich daraufhin einstellende Verlauf des Saugrohrdruckes wird zur Beurteilung ausgewertet.

Beispielsweise erfolgt ein gezieltes Zufahren der Drosselklappe beim Abstellen der Brennkraftmaschine und ein Auswerten des resultierenden Druckverlaufs im Saugrohr.

Mit anderen Worten: Gemäß diesem Beispiel erfolgt die Verringerung der Luftzufuhr durch ein gezieltes Zufahren der Drosselklappe.

Eine Ausgestaltung der Erfindung sieht vor, daß die Drosselklappe gezielt auf einen definierten Öffnungswinkel ein zugefahren wird.

Eine weitere Ausgestaltung zeichnet sich dadurch aus, daß beim Abstellen des Motors und beim gezielten Zufahren der Drosselklappe kein weiteres, dem Saugrohr zuführendes System aktiviert ist.

Gemäß einer weiteren Ausgestaltung wird dann, wenn eine Druckänderungsgeschwindigkeit einen vorbestimmten Schwellenwert überschreitet, auf eine Undichtigkeit des Systems geschlossen.

Eine weitere Ausgestaltung der Erfindung sieht vor, daß ein dem Saugrohr Masse zuführendes System gezielt betätigt wird und aus einem Vergleich des erwarteten Saugrohrdruckverlaufs mit dem gemessenen Saugrohrdruckverlauf auf den Massestrom dieses Systems geschlossen wird.

Die Erfindung richtet sich auch auf eine Steuereinrichtung zu Durchführung wenigstens eines der oben genannten Verfahren und Ausgestaltungen.

Gemäß einer weiteren Ausgestaltung der Erfindung umfaßt das dem Saugsystem Masse zuführende System eines der folgenden Systeme:
- die Abgasrückführung,
- die Tankentlüftung,
- sowie die Drosselklappe bei kleinen Drosselklappenwinkeln.

Wird der Motor abgestellt und die Drosselklappe dabei gezielt auf einen sehr kleinen Winkel gestellt und ist kein weiteres, dem Saugrohr Masse zuführendes System aktiviert, so ergibt sich in jedem Fall ein relativ langsamer Druckanstieg auf den Umgebungsdruck, wenn dem Saugrohr keine weiteren Masseströme außer dem über die Drosselklappe zufließen.

Aus einer höheren Druckänderungsgeschwindigkeit kann auf eine Undichtigkeit des Systems geschlossen werden.

Gegebenenfalls kann ein dem Saugrohr Masse zuführendes System, beispielsweise das Abgasrückführsystem, gezielt betätigt werden. Aus dem Vergleich des erwarteten Saugrohrdruckverlaufs mit dem gemessenen Saugrohrdruckverlauf kann auf den Massestrom dieses Systems geschlossen werden.

Die Erfindung richtet sich auch auf ein Steuergerät zur Durchführung des Verfahrens sowie der weiteren offenbarten Ausgestaltungen.

### Vorteile der Erfindung

Die Erfindung erlaubt eine Durchflußdiagnose von Systemen, die dem Saugsystem Masse zuführen, beispielsweise der Abgasrückführung, der Tankentlüftung sowie der Drosselklappe bei kleinen Drosselklappenwinkeln und eine Erkennung von Leckluftzuflüssen zum Saugrohr. In Versuchen wurde beispielsweise ein deutlicher Meßeffekt für eine Diagnose des Abgasrückführsystems festgestellt.

Von besonderem Vorteil ist, dass Massenströme mit relativ einfachen Funktionen ermittelt werden können. Die Erfindung liefert damit eine On Board Diagnose-Möglichkeit im Rahmen des vorhandenen Systemumfangs ohne zusätzlichen Systemaufwand (beispielsweise ohne spezielle zusätzliche Sensoren).

### Zeichnung

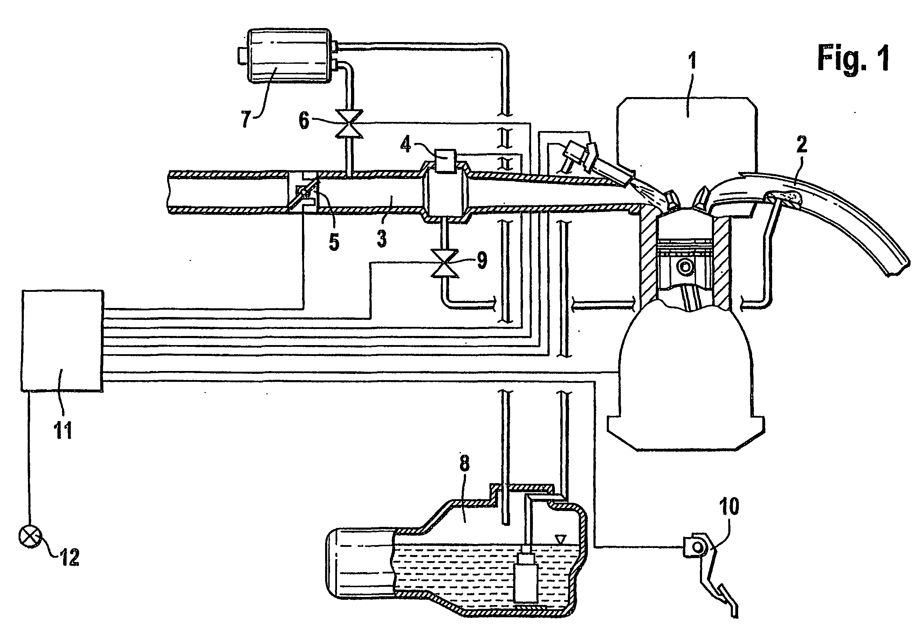

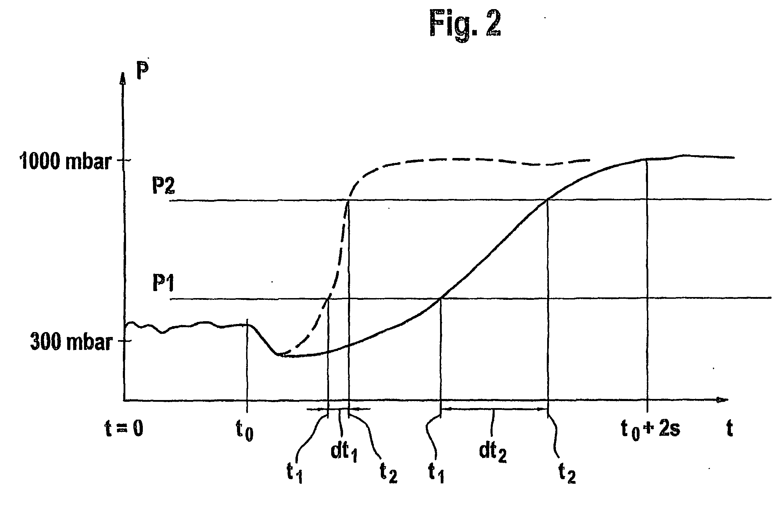

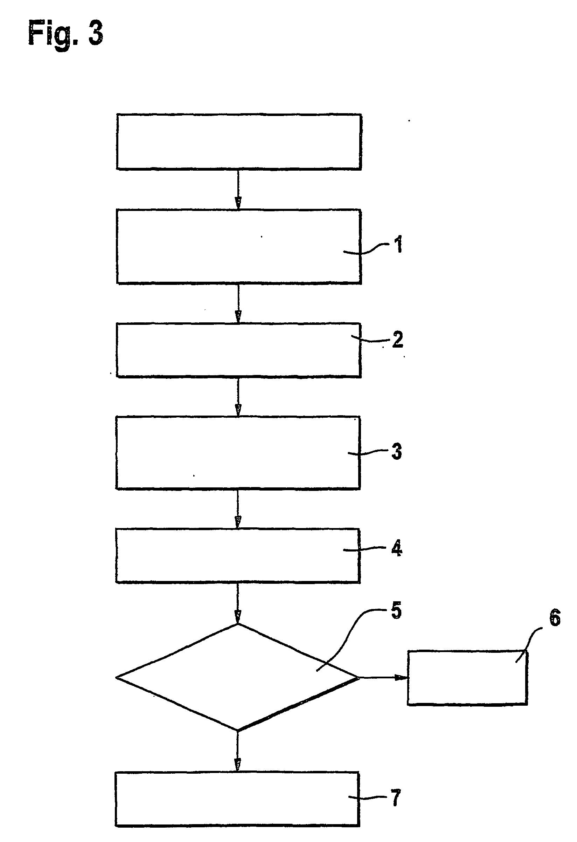

Figur 1 zeigt das technische Umfeld der Erfindung. Fig. 2 stellt zeitliche Verläufe des Saugrohrdruckes zur Veranschaulichung des erfindungsgemäßen Verfahrens dar. Figur 3 offenbart ein Flußdiagramm als Ausführungsbeispiel des erfindungsgemäßen Verfahrens.

In Fig. 1 bezeichnet die 1 einen Verbrennungsmotor, die 2 ein Abgasrohr, die 3 ein Saugrohr, die 4 einen Saugrohrdrucksensor die 5 eine elektrisch verstellbare Drosselklappe, die 6 ein Tankentlüftungsventil, die 7 einen Aktivkohlebehälter, die 8 einen Kraftstofftank, die 9 ein Abgasrückführventil, die 10 ein Fahrpedalmodul und die 11 ein Steuergerät. Die Ziffer 12 stellt ein Mittel zur Anzeige und/oder Abspeicherung von Diagnoseergebnissen dar, bspw. eine Fehlerlampe oder eine Speicherzelle zur Abspeicherung eines detaillierten Fehlercodes.

Über die geöffnete Drosselklappe fließt Luftmasse zum Saugrohr. Weitere Zuflüsse sind über das Tankentlüftungsventil 6 und/oder das Abgasrückführventil 9 und/oder ein Leck im Saugrohr möglich.

Der Saugrohrdrucksensor mißt den Gesamtdruck p-saug des Gases im Saugrohr.

Zeitliche Verläufe des Saugrohrdrucks sind in Fig. 2 dargestellt.

In der Zeitspanne zwischen t = 0 und t0 läuft der Motor im Leerlauf. Dabei stellt sich typischerweise ein Saugrohrdruck von etwa 300 mbar ein. Zum Zeitpunkt t0 wird der Motor abgestellt. Erfindungsgemäß wird die Drosselklappe dabei gezielt geschlossen. Die Drehzahl des abgestellten Motors fällt dann schnell auf Null ab. Aufgrund der beim Abstellen noch vorhandenen Motordrehung ergibt sich unter Umständen noch kurzzeitig ein sinkender Druck im Saugrohr. In jedem Fall folgt aber ein relativ langsamer Druckanstieg bis zum Wert des Umgebungsdrucks, wenn dem Saugrohr keine weiteren Massenströme neben dem Massenstrom über die Drosselklappe mehr zufließen. Siehe die durchgezogene Linie in der Fig. 2. In diesem Fall sank der Saugrohrdruck zunächst unter den Leerlaufdruck von ca 300 mbar und stieg dann in einem Zeitraum von mehr als zwei Sekunden auf den Umgebungsdruck (ca. 1000 mbar) an.

Die gestrichelte Linie in der Fig. 2 entspricht einem Druckverlauf, wie er bei einem geöffneten Abgasrückführventil zu erwarten ist. Der Saugrohrdruck steigt in diesem Fall erheblich schneller auf den Umgebungsdruck an.

Fig. 3 stellt ein Ausführungsbeispiel des erfindungsgemäßen Verfahrens dar. Schritt 1 wird aus einem übergeordneten Hauptprogramm zur Steuerung der Motorfunktionen erreicht, wenn der Verbrennungsmotor abgestellt werden soll. In diesem Fall erfolgt im Schritt 2 ein gezieltes Vermindern der Luftzufuhr durch ein Verkleinern des Drosselklappenöffnungswinkels. Schritt 3 dient zur Erfassung der Zeitpunkte t1 und t2, zu denen der ansteigende Saugrohrdruck einen ersten Druckschwellenwert P1 und einen zweiten Druckschwellenwert P2 erreicht. Die im Schritt 4 gebildete Differenz dt beider Zeitpunkte ist proportional zur Änderungsgeschwindigkeit des Saugrohrdruckes. In einem Schritt 5 erfolgt ein Vergleich der Differenz dt mit einem vorgegebenen Schwellenwert. Ist dt kleiner als der Schwellenwert, zeigt dies einen Massenstrom zum Saugrohr an. Dies kann als Indiz für ein defekt offenes Abgasrückführventil, ein defekt offenes Tankentlüftungsventil, eine nicht weit genug schließende Drosselklappe oder für ein Leck im Saugrohr gewertet werden (Schritt 6). Als Folge kann beispielsweise die Fehlerlampe 12 eingeschaltet werden. Ist dt nicht kleiner als die Schwelle, kann dies als Zeichen für Leckfreiheit (in Ordnung) gewertet werden (Schritt 7).

Als weiteres Ausführungsbeispiel kann ein System, das dem Saugrohr Masse zuführt, gezielt aktiviert werden. Beispielsweise kann ein Abgasrückführventil oder ein Tankentlüftungsventil gezielt geöffnet werden, so dass aus dem Vergleich des erwarteten Saugrohrdruckverlaufs mit dem gemessenen Saugrohrdruckverlauf auf den Massenstrom dieses Systems geschlossen werden kann.

## Patentansprüche

1. Verfahren zur Erfassung von Massenströmen zum Saugrohr (3) einer Brennkraftmaschine
- mit Mitteln (5, 11) zur Steuerung der Luftzufuhr zum Saugrohr (3) und mit
- Mitteln (4) zum Erfassen des Saugrohrdruckes und mit
- Mitteln (11) zum Auswerten des Saugrohrdruckverlaufs,
**dadurch gekennzeichnet, dass**
- beim Abstellen der Brennkraftmaschine
- die Luftzufuhr zum Saugrohr (3) gezielt verringert wird und dass der sich daraufhin einstellende Verlauf des Saugrohrdruckes ausgewertet wird und dass abhängig von diesem Verlauf ein Massenstrom zum Saugrohr (3) ermittelt wird.

2. Verfahren nach Anspruch 1, **dadurch gekennzeichnet, dass** die Verringerung der Luftzufuhr durch ein gezieltes Zufahren der Drosselklappe (5) erfolgt.

3. Verfahren nach Anspruch 2, **dadurch gekennzeichnet, dass** die Drosselklappe (5) gezielt auf einen definierten Öffnungswinkel zugefahren wird.

4. Verfahren nach einem der vorhergehenden Ansprüche, **dadurch gekennzeichnet, dass** beim Abstellen des Motors (1) und beim gezielten Zufahren der Drosselklappe (5) kein weiteres, dem Saugrohr (3) Masse zuführendes System aktiviert ist.

5. Verfahren nach einem der vorhergehenden Ansprüche, **dadurch gekennzeichnet, dass** dann, wenn eine Druckänderungsgeschwindigkeit einen vorbestimmten Schwellenwert überschreitet, auf eine Undichtigkeit des Systems geschlossen wird.

6. Verfahren nach einem der vorhergehenden Ansprüche, **dadurch gekennzeichnet, dass** ein dem Saugrohr (3) Masse zuführendes System gezielt betätigt wird und aus einem Vergleich des erwarteten Saugrohrdruckverlaufs mit dem gemessenen Saugrohrdruckverlauf auf den Massestrom dieses Systems geschlossen wird.

7. Verfahren nach Anspruch 6, **dadurch gekennzeichnet, dass** das dem Saugsystem Masse zuführende System eines der folgenden Systeme umfasst:
- die Abgasrückführung,
- die Tankentlüftung,
- sowie die Drosselklappe (5) bei kleinen Drosselklappenwinkeln.

## Claims

1. Method for the detection of mass flows to the suction pipe (3) of an internal combustion engine,
- with means (5, 11) for controlling the air supply to the suction pipe (3), and with
- means (4) for detecting the suction-pipe pressure, and with
- means (11) for evaluating the suction-pipe pressure profile,
**characterized in that**,
- during the stopping of the internal combustion engine,
- the air supply to the suction pipe (3) is reduced in a controlled manner, and **in that** the suction-pipe pressure profile thereupon occurring is evaluated, and **in that** a mass flow to the suction pipe (3) is determined as a function of this profile.

2. Method according to Claim 1, **characterized in that** the reduction in the air supply takes place by means of a controlled closing of the throttle valve (5).

3. Method according to Claim 2, **characterized in that** the throttle valve (5) is closed in a controlled manner to a defined opening angle.

4. Method according to one of the preceding claims, **characterized in that**, during the stopping of the engine (1) and during the controlled closing of the throttle valve (5), no further system supplying a mass to the suction pipe (3) is activated.

5. Method according to one of the preceding claims, **characterized in that**, when a rate of change in pressure overshoots a predetermined threshold value, a leak in the system is inferred.

6. Method according to one of the preceding claims, **characterized in that** a system supplying a mass to the suction pipe (3) is actuated in a controlled manner and the mass flow of this system is inferred from a comparison of the expected suction-pipe pressure profile with the measured suction-pipe pressure profile.

7. Method according to Claim 6, **characterized in that** the system supplying a mass to the suction system comprises one of the following systems:
- the exhaust-gas recirculation,
- the tank venting
- and the throttle valve (5) in the case of small throttle-valve angles.

## Revendications

1. Procédé de saisie de débits massiques vers la conduite d'admission (3) d'un moteur à combustion interne, comportant
- des moyens (5, 11) de commande de l'arrivée d'air vers la conduite d'admission (3),
- des moyens (4) pour saisir la pression de la conduite d'admission, et
- des moyens (11) pour exploiter la courbe de pression dans la conduite d'admission,
**caractérisé en ce que**
lors de l'arrêt du moteur à combustion interne, on réduit l'arrivée d'air à la conduite d'admission (3) de manière ciblée, on exploite la courbe de pression de la conduite d'admission et, en fonction de cette courbe, on détermine un débit massique vers la conduite d'admission (3).

2. Procédé selon la revendication 1,
**caractérisé en ce que**
la réduction de l'arrivée d'air s'effectue par une fermeture ciblée du volet d'étranglement (5).

3. Procédé selon la revendication 2,
**caractérisé en ce que**
le volet d'étranglement (5) est fermé de manière ciblée selon un angle d'ouverture défini.

4. Procédé selon l'une quelconque des revendications précédentes,
**caractérisé en ce que**
à l'arrêt du moteur (1) et lors d'une fermeture ciblée du volet d'étranglement (5), aucun autre système apportant une masse à la conduite d'admission (3) n'est activé.

5. Procédé selon l'une quelconque des revendications précédentes,
**caractérisé en ce que**
lorsqu'une vitesse de modification de pression dépasse une certaine valeur seuil, on conclut à une non-étanchéité du système.

6. Procédé selon l'une quelconque des revendications précédentes,
**caractérisé en ce qu'**
un système apportant une masse à la conduite d'admission (3) est actionné de façon ciblée et, à partir d'une comparaison entre la courbe attendue de la pression dans la conduite d'admission et la courbe mesurée de la pression dans la conduite d'admission, on conclut sur le débit massique du système.

7. Procédé selon la revendication 6,
**caractérisé en ce que**
le système apportant une masse au système d'admission comprend l'un des systèmes suivants :
- le retour des gaz d'échappement,
- le dégazage de réservoir,
- ainsi que le volet d'étranglement (5) pour de faibles angles de volet d'étranglement.
